# NEUE EUROPÄISCHE PATENTSCHRIFT

(11) **EP 3 030 471 B2**
(45) Veröffentlichungstag und Bekanntmachung des Hinweises auf die Entscheidung über den Einspruch: **20.07.2022**
(45) Hinweis auf die Patenterteilung: 17.10.2018
(21) Anmeldenummer: 14750200.9
(22) Anmeldetag: 07.08.2014
(51) Int. Cl.: B62B 3/02, B62B 3/12, B62B 3/10, B62B 5/00

(54) **ZUSAMMENLEGBARER TRANSPORTWAGEN**
FOLDABLE TRANSPORT TROLLEY
CHARIOT TRANSPORTEUR PLIABLE

(30) Priorität: 09.08.2013 DE 102013013339
(43) Veröffentlichungstag der Anmeldung: 15.06.2016
(73) Patentinhaber: Snowpixie Co., Ltd., Hitachinaka city Ibaraki 312-0032 (JP)
(72) Erfinder: MURABE, Shoichi, 85737 Ismaning (DE)
(74) Vertreter: Rings, Rolf
(86) Internationale Anmeldenummer: PCT/EP2014/066998
(87) Internationale Veröffentlichungsnummer: WO 2015/018898

(56) Entgegenhaltungen:
- DE-A1-102006 057 156
- DE-U1-202008 001 436
- DE-U1-202012 101 886
- DE-U1-202012 102 658
- GB-A- 2 493 805
- US-A- 4 793 622
- US-A- 5 857 684
- US-A1- 2004 026 897
- US-B1- 6 478 315

## Beschreibung

Die Erfindung betrifft, einen zusammenlegbaren Transportwagen, insbesondere für Golftaschen, der drei Räder an einem zusammenlegbaren bzw. faltbaren Rahmen aufweist, gemäß dem Oberbegriff von Anspruch 1 und 2.

Ein solcher Transportwagen ist aus der DE 202012101886 U1 bekannt. Weitere Wagen sind in den DE 10 2006 057 156 A1, DE 20 2012 102 658 U1 und US 6,478,315 B1 beschrieben.

Ein dreirädriger Transportwagen ist beispielsweise auch aus US 6 863 297 oder US 7 000 939 bekannt Hierbei ist ein in der Betriebsstellung schräg vom Griffteil zum Vorderrad verlaufender Rahmenbügel vorgesehen, an dessen Vorderende das Vorderrad angebracht ist, während sich die beiden Hinterräder über Streben an dem schräg liegenden Rahmenbügel abstützen. Zum Zusammenlegen werden die Streben an den Rahmenbügel geklappt und die Hinterräder in die Ebene des Rahmenbügels geschwenkt, während das Vorderrad, das in der Betriebsstellung mit seiner Drehachse etwa in der Ebene des Rahmenbügels liegt, quer zur Fahrtrichtung geschwenkt und dann in die Ebene des Rahmenbügels geklappt wird.

Dieser Aufbau ist insbesondere als Joggingroller geeignet, soll aber auch für Transportzwecke verwendbar sein, beispielsweise als Transportwagen für Golftaschen.

Der Erfindung liegt die Aufgabe zugrunde, einen Transportwagen der eingangs angegebenen Art so auszubilden, dass er insbesondere für den Transport von Golftaschen ausgebildet ist und einen leicht zusammenlegbaren und einfachen Aufbau hat.

Diese Aufgabe wird erfindungsgemäß durch die Merkmale im Kennzeichen der Ansprüche 1 und 2 gelöst.

Es wird ein dreirädriger Transportwagen vorgesehen, insbesondere für eine Golftasche, umfassend
- ein erstes lang gestrecktes Rahmenteil, an dessen einem Ende
- ein zweites lang gestrecktes Rahmenteil relativ zum ersten Rahmenteil verschwenkbar mit einem Ende angelenkt ist,
- an dessen freiem Ende ein Vorderrad über einen Radhaltebügel mit einer Schwenkachse verschwenkbar angebracht ist, durch die die Radebene um etwa 90° verschwenkbar ist,
- wobei die beiden Hinterräder an den Endbereichen eines langgestreckten Querträgers im Anlenkbereich zwischen dem ersten und zweiten Rahmenteil so verschwenkbar angelenkt sind, dass die Radebene aus einer Stellung etwa senkrecht zum Querträger in eine Stellung etwa parallel zum Querträger und umgekehrt verschwenkbar ist.

Dadurch, dass nur zwei in der Betriebsstellung in einem Winkel zueinander liegende Rahmenteile zusammengeklappt werden, wobei die Hinterräder in die Rahmenebene geklappt werden und das Vorderrad nur in die Ebene der Rahmenteile verdreht wird, ergibt sich ein einfacher Aufbau mit leichter Handhabung beim Zusammenlegen und Auseinanderfalten, wobei auch das Gewicht des Transportwagens gering gehalten werden kann.

Vorteilhafterweise sind die Hinterräder durch Lenker zwischen dem freien Ende des ersten oder zweiten Rahmenteils und Achskörpern der Hinterräder derart angelenkt, dass beim Verschwenken der Rahmenteile relativ zueinander die Ebene der Hinterräder um etwa 90° relativ zum Querträger verschwenkt werden. Hierdurch werden beim Verschwenken der Rahmenteile relativ zueinander selbsttätig die Hinterräder in die Trag- oder Betriebsstellung verschwenkt.

Der Querträger kann am unteren Ende des ersten Rahmenteils starr mit diesem verbunden werden, beispielsweise durch Schweißen. Vorzugsweise ist der Querträger mit dem zweiten Rahmenteil starr verbunden und über einen Bügel verschwenkbar am unteren Ende des ersten Rahmenteils angebracht. Hierdurch ist es möglich, in der Tragstellung die Hinterräder auf der gleichen Seite wie das Vorderrad zu positionieren, indem die Hinterräder auf der in Fahrtrichtung gesehenen Rückseite des Querträgers in der Betriebsstellung angebracht sind und der Querträger mit Hochklappen des zweiten Rahmenteils so verschwenkt wird, dass die Hinterräder durch die Lenker auf der Seite des Vorderrades unter diesem positioniert werden.

Die Hinterräder werden in vorteilhafter Weise durch Achskörper um etwa 90° verschwenkbar am Querträger angelenkt, wobei die Hinterräder an diesen Achskörpern verdrehbar gelagert sind.
In den Achskörpern selbst kann ein elektrischer Antriebsmotor für die Hinterräder integriert werden.

Zur Verlängerung der Abstützung des Transportwagens durch das Vorderrad ist der Radhaltebügel relativ zum zweiten Rahmenteil zweckmäßigerweise längs seiner Schwenkachse ausziehbar und einschiebbar ausgebildet, sodass das Vorderrad in der Betriebsstellung herausgezogen und in der Tragstellung eingeschoben werden kann.

Zwischen erstem und zweitem Rahmenteil kann vorteilhafterweise eine Abstützeinrichtung für die Betriebsstellung vorgesehen werden, die die beiden Rahmenteile in einem Winkel relativ zueinander hält.
Diese Abstützeinrichtung kann als Kniehebel ausgebildet werden, dessen beide relativ zueinander verschwenkbaren Hebelabschnitte am ersten und zweiten Rahmenteil angelenkt sind.
Es kann aber auch eine andere Abstützeinrichtung beispielsweise in Form einer Feder zwischen den beiden Rahmenteilen vorgesehen werden.

Zum bequemen Verfahren des Transportwagens in der Betriebsstellung kann am freien Ende des ersten Rahmenteils ein Griffbügel verschwenkbar angelenkt sein, der in der Betriebsstellung vom ersten Rahmenteil weggeschwenkt und in der Tragstellung etwa parallel zum ersten Rahmenteil zurückgeschwenkt werden kann, wobei in den beiden Endstellungen eine federbeaufschlagte oder mit einer Rasteinrichtung versehene Arretiereinrichtung vorgesehen werden kann, um die Einstellungen zu fixieren.

Am ersten und am zweiten Rahmenteil wird zweckmäßigerweise jeweils eine Halte- bzw. Abstützeinrichtung für eine Golftasche oder ein zu transportierendes längliches Gut angebracht, wobei für den Transport einer Golftasche am ersten Rahmenteil zweckmäßigerweise ein in Laschen an der Golftasche einsteckbarer gekrümmter Einsteckbügel angebracht wird und am zweiten Rahmenteil ein von diesem abstehender Halter zum Abstützen der Golftasche.

Beispielsweise Ausführungsformen der Erfindung werden im Folgenden anhand der Zeichnung näher erläutert. Es zeigen
- Fig. 1: eine perspektivische Ansicht einer ersten Ausführungsform des Transportwagens in der Betriebs- bzw. Fahrstellung,
- Fig. 2: eine perspektivische Ansicht des Transportwagens in der Tragstellung,
- Fig. 3 + 4: Zwischenstellungen beim Zusammenlegen des Transportwagens aus der Betriebsstellung in Fig. 1 in die Tragstellung in Fig. 2 oder umgekehrt,
- Fig. 5: eine Golftasche auf dem Transportwagen in der Betriebsstellung,
- Fig. 6: in perspektivischer Ansicht eine zweite Ausführungsform,
- Fig. 7: eine Ansicht einer Zwischenstellung beim Zusammenfalten des Transportwagens, und
- Fig. 8: eine perspektivische Ansicht der zweiten Ausführungsform in der Tragstellung.

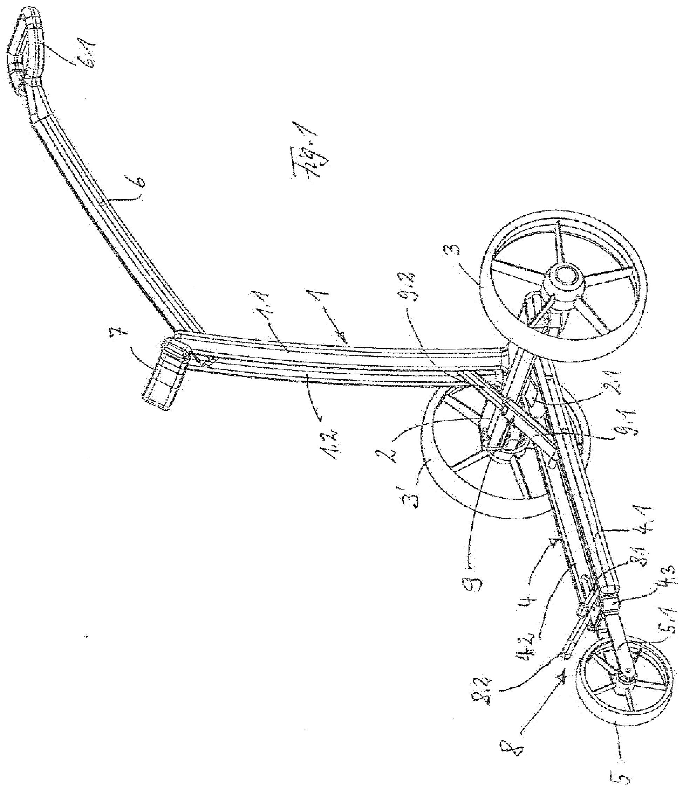

Der als Golftaschen-Caddy ausgebildete Transportwagen in Fig. 1 weist in der Betriebsstellung ein aufrechtes erstes lang gestrecktes Rahmenteil 1 mit einem Querträger 2 am unteren Ende auf, an dessen gegenüberliegenden Enden drehbare Hinterräder 3 und 3' mit ihrer Drehachse verschwenkbar angelenkt sind. Vom unteren Ende des aufrechten ersten Rahmenteils 1 erstreckt sich horizontal ein zweites lang gestrecktes Rahmenteil 4, an dessen Vorderende ein drehbares Vorderrad 5 mit seiner Drehachse verschwenkbar angelenkt ist.

Bei dem dargestellten Ausführungsbeispiel besteht das aufrechte erste Rahmenteil 1 aus zwei parallel verlaufenden Rohrkörpern 1.1 und 1.2, die mit dem vorzugsweise als Rechteckrohr ausgebildeten Querträger 2 durch eine Schweißverbindung starr verbunden sind. Am oberen Ende ist zwischen den Rohrkörpern 1.1 und 1.2 ein Griffbügel 6 verschwenkbar angebracht, der an seinem freien Ende mit einem Griff 6.1 versehen ist. Weiterhin ist am oberen Ende des aufrechten ersten Rahmenteils 1 ein bogenförmiges Einsteckelement 7 befestigt, dessen gegen-überliegende Ende in Laschen einer nicht dargestellten Golftasche eingesteckt werden können, um die Golftasche auf dem Caddy in einer aufrechten Stellung zu halten.

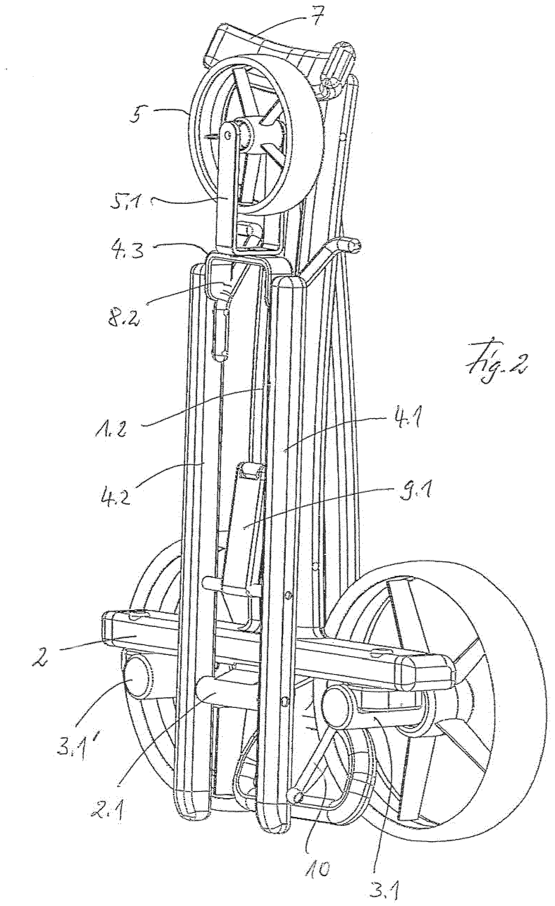

Fig. 2 zeigt einen in Fahrrichtung nach vorne abstehenden Ansatz 2.1 in der Mitte des Querträgers 2, an dem zwei Rahmenstreben 4.1 und 4.2 des in der Betriebsstellung der Fig. 1 horizontalen zweiten Rahmenteils 4 angelenkt sind. Das zweite Rahmenteil 4 ist etwa U-förmig mit den beiden Rahmenstreben 4.1 und 4.2 als Schenkel und einem Bügel 4.3 als Steg ausgebildet. An diesem Bügel 4.3 ist ein Radhaltebügel 5.1 mit einer Schwenkachse in Längsrichtung der Rahmenstreben 4.1 und 4.2 so angelenkt, dass der Radhaltebügel 5.1 nach Lösen einer Arretierung so verschwenkt werden kann, dass die Ebene des Vorderrades 5 in der Ebene der Rahmenstreben 4.1 und 4.2 liegt, wie dies die Tragstellung in Fig. 2 zeigt.

Als Arretierung zwischen dem Radhaltebügel 5.1 und dem Bügel 4.3 am zweiten Rahmenteil 4 kann ein Eingriffsteil an einem der beiden Bauelemente vorgesehen werden, der in eine Ausnehmung am anderen Bauelement eingreift, wobei die jeweilige Eingriffsstellung durch eine Feder beaufschlagt ist.

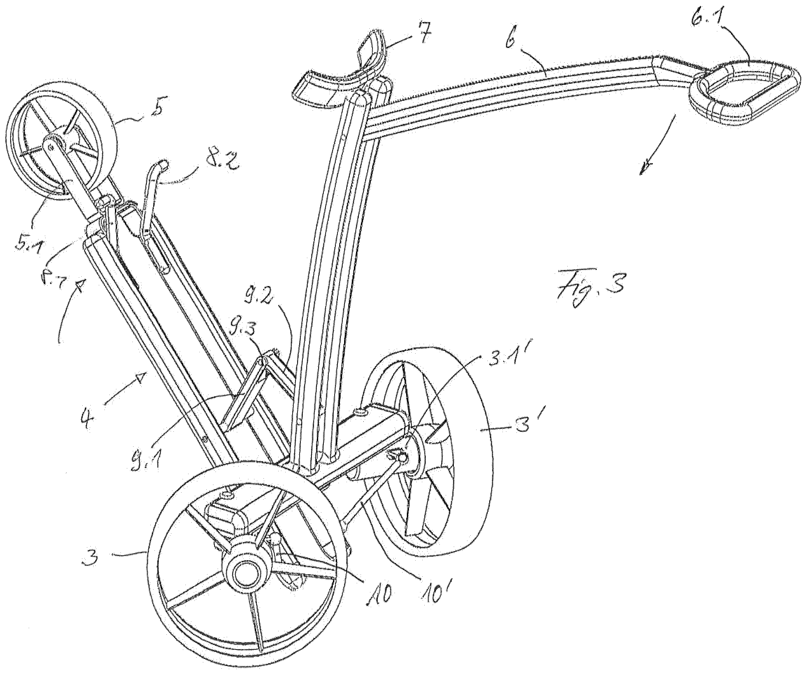

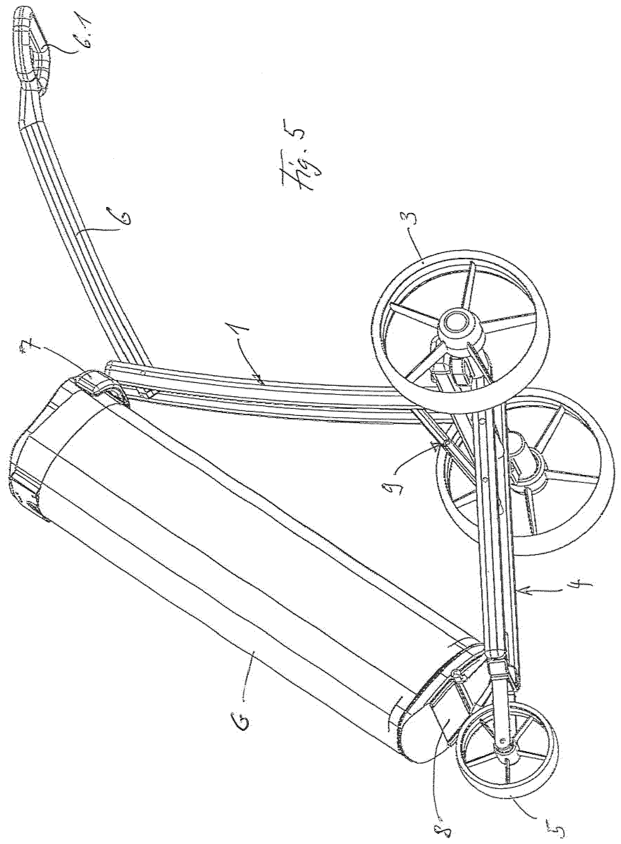

An den Vorderenden der beiden Rahmenstreben 4.1 und 4.2 ist jeweils eine beispielsweise durch einen abgewinkelten Rundstab ausgebildete Abstützung 8 befestigt, die in der Betriebsstellung der Fig. 1 schräg nach vorne und vom zweiten Rahmenteil 4 nach oben vorsteht, so dass eine auf dem zweiten Rahmenteil 4 aufgesetzte Golftasche T in Längsrichtung abgestützt wird, wie dies Fig. 5 zeigt. Zwischen den Rahmenteilen 1 und 4 ist nahe dem Querträger 2 ein Kniehebel 9 jeweils zwischen den Rahmenstreben 4.1, 4.2 und den Rohrkörpern 1.1, 1.2 angelenkt, der in der Betriebsstellung der Fig. 1 in seiner gestreckten Stellung die beiden Rahmenteile 1 und 4 in einem Winkel von etwa 90° zueinander hält und der durch eine Gelenkverbindung 9.3 im Mittelbereich zwischen den Kniehebelteilen 9.1 und 9.2 zusammengefaltet werden kann, wie dies die Zwischenstellung in Fig. 3 zeigt.

Es ist aber auch möglich, eine Abstützung in der Form des Kniehebels 9 wegzulassen, sodass die Golftasche G, die auf dem zweiten Rahmenteil 4 aufliegt und am ersten Rahmenteil 1 eingehängt ist, zur Stabilisierung der beiden Rahmenteile 1 und 4 relativ zueinander in der Betriebsstellung dient, wie dies aus Fig. 5 erkennbar ist.

An den Enden des Querträgers 2 ist bei der ersten Ausführungsform jeweils ein Achskörper 3.1 und 3.1' des zugeordneten Hinterrades 3 bzw. 3' mit einer Schwenkachse etwa parallel zum ersten Rahmenteil 1 bzw. in Längsrichtung des ersten Rahmenteils 1 senkrecht zur Längserstreckung des Querträgers 2 angelenkt, so dass der Achskörper 3.1, 3.1', der in der Betriebsstellung der Fig. 1 in Verlängerung des Querträgers 2 ausgerichtet ist, in eine um etwa 90° gedrehte Stellung verschwenkt werden kann, wie Fig. 2 in der Tragstellung zeigt, in der die Achskörper 3.1, 3.1' etwa senkrecht zur Längserstreckung des Querträgers 2 liegen. Die Hinterräder 3 und 3' sind mit dem Achskörper 3.1 und 3.1' verdrehbar verbunden bzw. an einem Ende jedes Achskörpers drehbar gelagert.

Um die beiden Achskörper 3.1 und 3.1' aus der Betriebsstellung in Fig. 1 in die Tragstellung in Fig. 2 zu verschwenken, sind die beiden Achskörper jeweils über einen Lenker 10 bzw. 10' mit dem unteren Ende der zugeordneten Rahmenstreben 4.1 bzw. 4.2 gelenkig verbunden, so dass beim Hochklappen des in der Betriebsstellung etwa horizontal liegenden zweiten Rahmenteils 4 in Fig. 3 die beiden Achskörper 3.1 und 3.1' über die Lenker 10 und 10' relativ zum Querträger 2 in die Tragstellung in Fig. 2 verschwenkt werden, in der die Ebene der Hinterräder 3 und 3' etwa parallel zur Ebene der zusammengefalteten Rahmenteile 1 und 4 liegt.

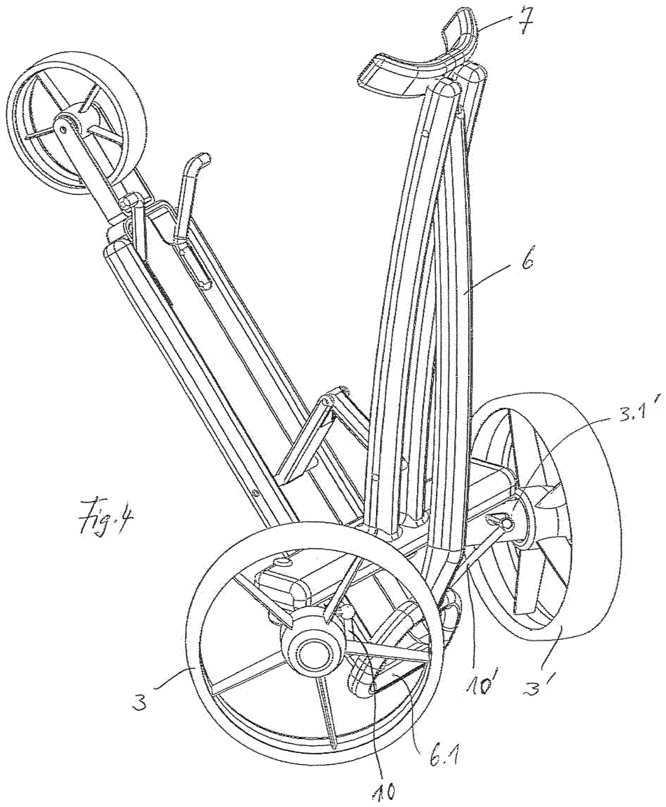

Beim Zusammenfalten aus der Betriebsstellung in Fig. 1 kann zunächst der Griffbügel 6 nach unten verschwenkt werden, wie dies Fig. 3 und 4 zeigen, so dass der Griff 6.1 etwa zwischen die beiden Hinterräder 3 und 3' zu liegen kommt, worauf das zweiten Rahmenteil 4 in Pfeilrichtung nach oben etwa parallel zum ersten Rahmenteil 1 geschwenkt wird, wobei der Kniehebel 9 abgewinkelt wird und die Hinterräder 3 und 3' über die Lenker 10 und 10' verschwenkt werden, so dass sich die in Fig. 2 wiedergegebene Tragstellung ergibt, in der der Einsteckbügel 7 am oberen Ende des ersten Rahmenteils 1 als Traggriff verwendet werden kann.
Vor oder nach dem Hochklappen des zweiten Rahmenteils 4 wird das Vorderrad 5 durch Wegziehen vom zweiten Rahmenteil 4 gegen die Kraft einer Feder einer nicht dargestellten Arretierung mit dem Radtragbügel 5.1 um dessen Achse verschwenkt, so dass die Drehachse des Vorderrads 5 etwa senkrecht zum Querträger 2 verläuft.

Es sind verschiedene Abwandlungen der beschriebenen Bauweise möglich. Vorteilhafterweise ist der Radtragbügel 5.1 des Vorderrads 5 längs seiner Schwenkachse, die in Längsrichtung des zweiten Rahmenteils 4 verläuft, relativ zum zweiten Rahmenteil 4 ausfahrbar und wieder einfahrbar ausgebildet, so dass die Fahrposition des Vorderrads in der Betriebsstellung der Fig. 1 auch in einem größeren Abstand vom Vorderende des horizontal liegenden zweiten Rahmenteils 4 positioniert werden kann. Hierfür kann sich ein Stab zwischen den beiden Rahmenstreben 4.1 und 4.2 in Richtung der Schwenkachse am Bügel 4.3 erstrecken, wobei der Radhaltebügel 5.1 längs dieses Stabes ausfahrbar ist und in der Tragposition wieder eingeschoben werden kann.

Für die Arretierung der einzelnen Positionen des Vorderrades 5 einerseits und der Hinterräder 3 andererseits können verschiedene an sich bekannte Arretierungseinrichtungen vorgesehen werden, die vorzugsweise federbeaufschlagt sind. Gleiches gilt für die Position der Griffstrebe 6 relativ zum ersten Rahmenteil 1.

Anstelle des Knickhebels 9 zwischen erstem und zweitem Rahmenteil 1 und 4 kann auch eine Druckfeder angelenkt sein, durch die die beiden Rahmenteile 1 und 4 in der Betriebsstellung auseinandergedrückt werden und die beim Zusammenfalten der beiden Rahmenteile beispielsweise längs einem der Rahmenteile mit einem Ende verschoben wird, so dass sie nicht mehr die beiden Rahmenteile auseinanderdrückt.

Weiterhin können verschiedene Halteeinrichtungen für die auf den Rahmenteilen 1 und 4 abzustützende Golftasche G vorgesehen werden. Beispielsweise kann der gebogene Einsteckbügel 7 zum Einstecken in Laschen an der Golftasche auch durch ein Band ersetzt oder ergänzt werden, das um die Golftasche gelegt werden kann und diese am ersten Rahmenteil 1 hält.

Nach einer weiteren Abwandlung können die Rahmenteile 1 und 4 in anderer Weise ausgestaltet sein, beispielsweise durch eine einzelne Rahmenstrebe anstelle der dargestellten zwei Rahmenstreben. Auch können die Rahmenteile 1 und/oder 4 als langgestreckte Platten ausgebildet sein.

Die bei dem dargestellten Ausführungsbeispiel starr am zweiten Rahmenteil 4 befestigten einzelnen Abstützstreben 8.1 und 8.2 können auch durch eine andere Abstützung 8 beispielsweise in Form eines Bügels oder einer Platte zwischen den beiden Rahmenstreben 4.1 und 4.2 ausgebildet werden.

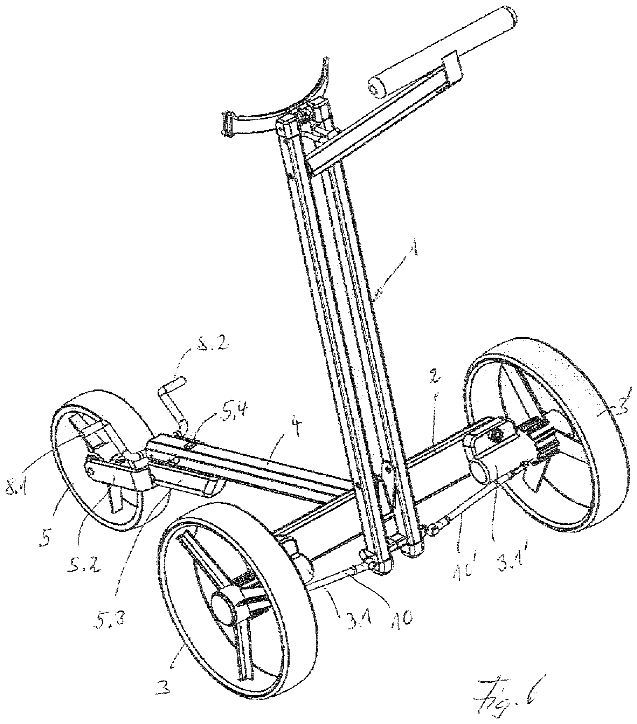

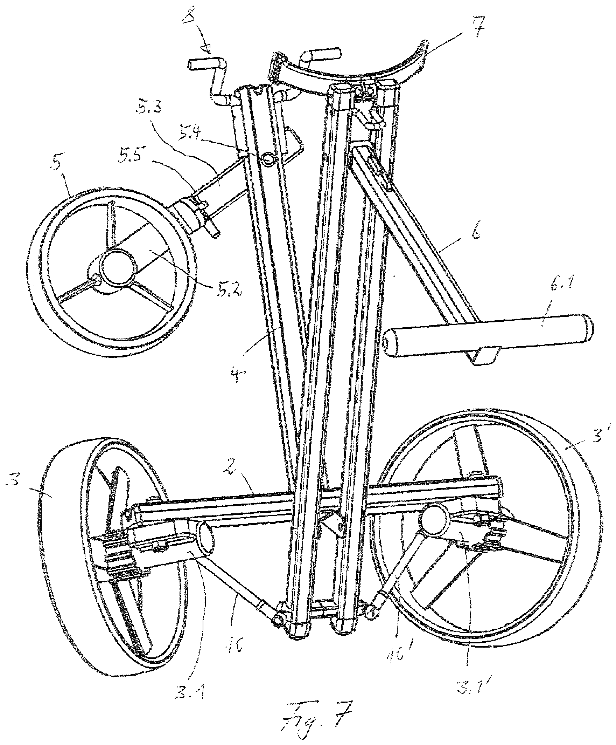

Fig. 6 zeigt in perspektivischer Ansicht eine zweite Ausführungsform des Transportwagens. Das Vorderrad 5 wird durch einen etwa L-förmigen Bügel 5.2 drehbar gehalten, dessen kurzer Schenkel sich quer zur Radebene in der Stellung der Fig. 6 erstreckt. Dieser kurze Schenkel ist durch eine in der Radebene in Fig. 6 verlaufende Schwenkachse mit einem Führungskörper 5.3 verbunden, der sich in Fig. 6 längs des zweiten Rahmenteils 4 erstreckt. Dieser Führungskörper 5.3 ist durch eine quer zur Drehachse des Vorderrades 5 verlaufende Schwenkachse 5.4 in Fig. 6 mit dem zweiten Rahmenteil 4 verbunden. Über den Bügel 5.2 kann die Ebene des Vorderrades um etwa 90° verschwenkt werden, während der Führungskörper 5.3 um ca. 180° relativ zum zweiten Rahmenteil 4 verschwenkt werden kann, wie dies Fig. 7 zeigt.

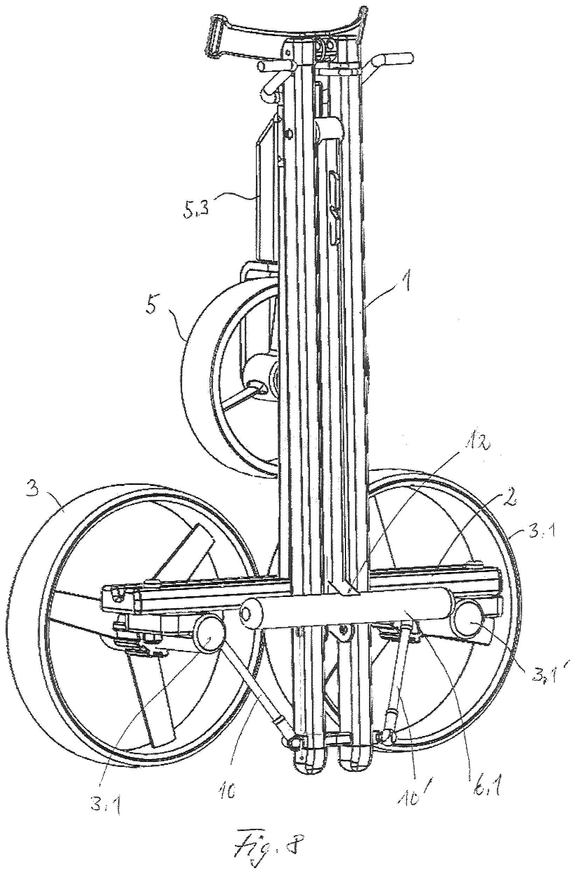

Zugleich ist die Schwenkachse des Bügels 5.2 am Führungskörper 5.3 teleskopartig aus- und einschiebbar.
Durch diesen Aufbau kann das Vorderrad 5 in der Tragstellung nach unten gekippt werden im Gegensatz zu der Anordnung nach oben in Fig. 2.
Mit anderen Worten kann das Vorderrad 5 in verschiedener Weise verschwenkbar und ausziehbar am zweiten Rahmenteil 4 angelenkt werden.
Fig. 7 zeigt einen Raststift 5.5 am Bügel 5.2, der in eine Kerbe am Führungskörper 5.3 in der jeweiligen Schwenkstellung einrastet, um das Vorderrad 5 in der jeweiligen Schwenkstellung relativ zum Führungskörper 5.3 zu fixieren, der ebenfalls mit einer Raste relativ zum zweiten Rahmenteil 4 versehen sein kann.
Wie bei der ersten Ausführungsform ist auch bei der zweiten Ausführungsform der Querträger 2 nach Art einer schmalen Platte ausgebildet, die aber im Gegensatz zur ersten Ausführungsform starr, bspw. durch Schweißen, mit dem zweiten Rahmenteil 4 so verbunden ist, dass die Ebene des Querträgers 2 etwa senkrecht zum zweiten Rahmenteil 4 verläuft, wie Fig. 6 zeigt, so dass beim Hochschwenken des zweiten Rahmenteils 4 in Fig. 7 auch der Querträger 2 mit verschwenkt wird.
Der Querträger 2 kann mit dem zweiten Rahmenteil 4 aus der Betriebsstellung in Fig. 6, in der die Ebene des Querträgers 2 etwa parallel zur Längserstreckung des ersten Rahmenteils 1 liegt, um etwa 90° in die Tragestellung in Fig. 8 verschwenkt werden, in der die Ebene des Querträgers 2 etwa senkrecht zum ersten Rahmenteil 1 liegt.
Der Querträger 2 selbst ist über einen U-förmigen Bügel mit dem ersten Rahmenteil 1 verschwenkbar verbunden, wobei die beiden Schenkel dieses U-förmigen Bügels an den Endbereichen der beiden Streben des ersten Rahmenteils 1 angelenkt sind.
Wie ein Vergleich der Fig. 1 und Fig. 6 zeigt, ist der Querträger 2 in der Betriebsstellung der Fig. 6 im Verhältnis zu der Ausführungsform nach Fig. 8 hochkant positioniert, so dass die Achskörper 3.1 und 3.1' an der Rückseite des Querträgers 2 angelenkt sind. In der zusammengefalteten Stellung nach Fig. 8 befinden sich dann die Laufräder 3 auf der gleichen Seite wie das nach unten gefaltete Vorderrad 5, wodurch sich ein kompakter Aufbau in der Tragstellung ergibt.

Die bei der ersten Ausführungsform vorgesehene Abstützung 9 zwischen ersten Rahmenteil 1 und zweiten Rahmenteil 4 ist bei der zweiten Ausführungsform nach Fig. 6 bis 8 nicht vorhanden. Die Abstützung in der Betriebsstellung wird durch die zwischen den Haltern 7 und 8 eingesetzte Golftasche übernommen.

Der Griffbügel 6 ist bei der zweiten Ausführungsform geradeaus gebildet und kann in der zusammengeklappten Stellung zwischen den beiden Streben des ersten Rahmenteils 1 eingeklappt werden, wobei der Griffteil 6.1 mittels einer Raste am Rahmenteil 1 fixiert werden kann, wie in Fig. 8 bei 12 angedeutet.

Der beschriebene Transportwagen kann auch mit einem elektrischen Antriebsmotor versehen werden, durch den die Hinterräder 3 antreibbar sind. Vorzugsweise werden jeweils in den Achskörpern 3.1 und 3.1' Elektromotoren mit Getriebe integriert. Am Oberteil des ersten Rahmenteils 1 kann hierbei ein entsprechendes Bedienpult mit Batterieeinsatz vorgesehen werden.

Der beschriebene Transportwagen kann nicht nur für Golftaschen verwendet werden, er ist auch für langgestreckte Behälter geeignet, die sich am ersten Rahmenteil 1 anlehnen und am zweiten Rahmenteil 4 aufliegen. Mit anderen Worten ist der beschriebene Transportwagen in vielfältiger Hinsicht einsetzbar.

## Patentansprüche

1. Dreirädriger Transportwagen, insbesondere für eine Golftasche (G), umfassend
- ein erstes lang gestrecktes Rahmenteil (1), an dessen einem Endbereich ein zweites lang gestrecktes Rahmenteil (4) mit einem Endbereich relativ zum ersten Rahmenteil (1) verschwenkbar angebracht ist,
- wobei am freien Endbereich des zweiten Rahmenteils (4) ein Vorderrad (5) über einen Radhaltebügel (5.1, 5.2) mit einer Schwenkachse verschwenkbar angebracht ist, durch die die Ebene des Vorderrades (5) um etwa 90° verschwenkbar ist, und
- wobei die beiden Hinterräder (3, 3') an den Endbereichen eines langgestreckten Querträgers (2) im Anlenkbereich zwischen dem ersten und zweiten Rahmenteil (1, 4) so verschwenkbar angelenkt sind, dass ihre Drehachsen aus einer Stellung etwa in Verlängerung des Querträgers (2) in eine Stellung etwa senkrecht zum Querträger (2) und umgekehrt verschwenkbar sind,
- wobei die Hinterräder (3, 3') durch Achskörper (3.1, 3.1') um etwa 90° verschwenkbar am Querträger (2) angelenkt sind, **dadurch gekennzeichnet,**
- **dass** die Hinterräder (3, 3') durch stangenförmige Lenker (10, 10') zwischen dem ersten Rahmenteil (1) und den Achskörpern (3.1, 3.1') mit einer Gelenkverbindung zu diesen derart verbunden sind, dass beim Verschwenken der Rahmenteile (1, 4) relativ zueinander die Hinterräder (3, 3') um etwa 90° relativ zum Querträger (2) verschwenkt werden.

2. Dreirädriger Transportwagen, insbesondere für eine Golftasche (G), umfassend
- ein erstes lang gestrecktes Rahmenteil (1), an dessen einem Endbereich ein zweites lang gestrecktes Rahmenteil (4) mit einem Endbereich relativ zum ersten Rahmenteil (1) verschwenkbar angebracht ist,
- wobei am freien Endbereich des zweiten Rahmenteils (4) ein Vorderrad (5) über einen Radhaltebügel (5.1, 5.2) mit einer Schwenkachse verschwenkbar angebracht ist, durch die die Ebene des Vorderrades (5) um etwa 90° verschwenkbar ist, und
- wobei die beiden Hinterräder (3, 3') an den Endbereichen eines langgestreckten Querträgers (2) im Anlenkbereich zwischen dem ersten und zweiten Rahmenteil (1, 4) so verschwenkbar angelenkt sind, dass ihre Drehachsen aus einer Stellung etwa in Verlängerung des Querträgers (2) in eine Stellung etwa senkrecht zum Querträger (2) und umgekehrt verschwenkbar sind,
- wobei die Hinterräder (3, 3') durch Achskörper (3.1, 3.1') um etwa 90° verschwenkbar am Querträger (2) angelenkt sind, **dadurch gekennzeichnet,**
- **dass** die Hinterräder (3, 3') durch stangenförmige Lenker (10, 10') zwischen dem zweiten Rahmenteil (4) und den Achskörpern (3.1, 3.1') mit einer Gelenkverbindung zu diesen derart verbunden sind, dass beim Verschwenken der Rahmenteile (1, 4) relativ zueinander die Hinterräder (3, 3') um etwa 90° relativ zum Querträger (2) verschwenkt werden.

3. Transportwagen nach Anspruch 2, wobei der Querträger (2) am unteren Ende des ersten Rahmenteils (1) starr mit diesem verbunden ist.

4. Transportwagen nach Anspruch 1, wobei der Querträger (2) mit dem zweiten Rahmenteil (4) starr verbunden und am ersten Rahmenteil (1) verschwenkbar angelenkt ist.

5. Transportwagen nach einem der vorhergehenden Ansprüche 1 bis 4, wobei der Radhaltebügel (5.1, 5.2) relativ zum zweiten Rahmenteil (4) längs seiner Schwenkachse ausziehbar und einschiebbar ist.

6. Transportwagen nach einem der vorhergehenden Ansprüche, wobei zwischen erstem und zweitem Rahmenteil (1, 4) eine Abstützeinrichtung (9) vorgesehen ist, die die beiden Rahmenteile (1, 4) in der Betriebsstellung in einem Winkel relativ zueinander hält und ein Verschwenken der beiden Rahmenteile (1, 4) relativ zueinander zulässt.

7. Transportwagen nach einem der vorhergehenden Ansprüche, wobei am freien Ende des ersten Rahmenteils (1) ein Griffbügel (6) verschwenkbar angelenkt ist.

8. Transportwagen nach einem der vorhergehenden Ansprüche, wobei am erstem und am zweiten Rahmenteil (1, 4) jeweils eine Halte- bzw. Abstützeinrichtung (7, 8) für eine Golftasche angebracht ist.

9. Transportwagen nach Anspruch 8, wobei am ersten Rahmenteil (1) ein in Laschen an der Golftasche einsteckbarer gekrümmter Einsteckbügel (7) angebracht ist.

10. Transportwagen nach Anspruch 8, wobei am zweiten Rahmenteil (4) ein vom zweiten Rahmenteil abstehender Halter (8) zum Abstützen einer Golftasche angebracht ist.

11. Transportwagen nach einem der vorhergehenden Ansprüche 1 bis 10, wobei in den Achskörpern (3.1, 3.1') ein elektrischer Antriebsmotor für die Hinterräder (3, 3') integriert ist.

## Claims

1. Three-wheel trolley, in particular for a golf bag (G), comprising
- a first elongated frame section (1), to one end region of which a second elongated frame section (4) is pivotably attached with one end region relative to the first frame section (1),
- wherein at the free end region of the second frame section (4) a front wheel (5) is pivotably attached by way of a wheel retaining clip (5.1, 5.2) to a pivoting axle, by means of which the plane of the front wheel (5) is pivotable through approximately 90°, and
- wherein both the rear wheels (3, 3') at the end regions of an elongated transverse member (2) in the linkage region between the first and second frame section (1, 4) are pivotably linked so that their axes of rotation are pivotable from one position approximately in extension of the transverse member (2) into a position approximately vertical to the transverse member (2) and vice versa,
- wherein the rear wheels (3, 3') are pivotably linked through approximately 90° to the transverse member (2) by axle casings (3.1, 3.1'), **characterised in that**
- the rear wheels (3, 3') are connected by rod-form struts (10, 10') between the first frame section (1) and the axle casings (3.1, 3.1') with an articulated connection to these in such a manner that when the frame sections (1, 4) pivot relative to each other the rear wheels (3, 3') are pivoted through approximately 90° relative to the transverse member (2).

2. Three-wheel trolley, in particular for a golf bag (G), comprising
- a first elongated frame section (1), to one end region of which a second elongated frame section (4) is pivotably attached with one end region relative to the first frame section (1),
- wherein at the free end region of the second frame section (4) a front wheel (5) is pivotably attached by way of a wheel retaining clip (5.1, 5.2) to a pivoting axle, by means of which the plane of the front wheel (5) is pivotable through approximately 90°, and
- wherein both the rear wheels (3, 3') at the end regions of an elongated transverse member (2) in the linkage region between the first and second frame section (1, 4) are pivotably linked so that their axes of rotation are pivotable from one position approximately in extension of the transverse member (2) into a position approximately vertical to the transverse member (2) and vice versa,
- wherein the rear wheels (3, 3') are pivotably linked through approximately 90° to the transverse member (2) by axle casings (3.1, 3.1'), **characterised in that**
- the rear wheels (3, 3') are connected by rod-form struts (10, 10') between the second frame section (4) and the axle casings (3.1, 3.1') with an articulated connection to these in such a manner that when the frame sections (1, 4) pivot relative to each other the rear wheels (3, 3') are pivoted through approximately 90° relative to the transverse member (2).

3. Trolley according to claim 2, wherein the transverse member (2) at the bottom end of the first frame section (1) is rigidly connected to the latter.

4. Trolley according to claim 1, wherein the transverse member (2) is rigidly connected to the second frame section (4) and pivotably linked to the first frame section (1).

5. Trolley according to any of preceding claims 1 to 4, wherein the wheel retaining clip (5.1, 5.2) is extendable and retractable relative to the second frame section (4) along its pivoting axis.

6. Trolley according to any of the preceding claims, wherein between the first and second frame section (1, 4) is provided a support device (9) which holds both the frame sections (1, 4) in the operating position at an angle relative to each other and permits a pivoting of the two frame sections (1, 4) relative to each other.

7. Trolley according to any of the preceding claims, wherein at the free end of the first frame section (1) a hand grip (6) is pivotably linked.

8. Trolley according to any of the preceding claims, wherein to the first and to the second frame section (1, 4) respectively is attached a holding or support device (7, 8) for a golf bag.

9. Trolley according to claim 8, wherein to the first frame section (1) is attached a curved insertion bracket (7) insertable into loops on the golf bag.

10. Trolley according to claim 8, wherein to the second frame section (4) is attached a holder (8) protruding from the second frame section for supporting a golf bag.

11. Trolley according to any of preceding claims 1 to 10, wherein an electric drive motor for the rear wheels (3, 3') is integrated in the axle casings (3.1, 3.1').

## Revendications

1. Chariot de transport à trois roues, en particulier pour un sac de golf (G), comprenant
- une première partie de cadre allongée (1) à une zone d'extrémité de laquelle une deuxième partie de cadre allongée (4) est montée avec une zone d'extrémité pouvant pivoter par rapport à la première partie de cadre (1),
- dans lequel au niveau d'une zone d'extrémité libre de la deuxième partie de cadre (4), une roue avant (5) est montée de façon à pouvoir pivoter sur un étrier de support de roue (5.1, 5.2) avec un axe de pivotement par le biais duquel le plan de la roue avant (5) peut pivoter d'environ 90°, et
- dans lequel les deux roues arrière (3, 3') sont articulées au niveau des zones d'extrémité d'une traverse allongée (2) dans la zone d'articulation entre les première et deuxième parties de cadre (1, 4) de façon à pouvoir pivoter de telle sorte que leur axe de rotation peut pivoter d'une position à peu près en prolongement de la traverse (2) dans une position à peu près perpendiculaire par rapport à la traverse (2) et inversement,
- dans lequel les roues arrière (3, 3') sont articulées par un corps d'axe (3.1, 3.1') de façon à pouvoir pivoter d'environ 90° sur la traverse (2), **caractérisé en ce que**
- les roues arrière (3, 3') sont reliées par un guidon en forme de tige (10, 10') entre la première partie de cadre (1) et les corps d'axe (3.1, 3.1') avec un joint articulé vers celles-ci de telle sorte que lors du pivotement des parties de cadre (1, 4) l'une par rapport à l'autre, les roues arrière (3, 3') pivotent d'environ 90° par rapport à la traverse (2).

2. Chariot de transport à trois roues, en particulier pour un sac de golf (G), comprenant
- une première partie de cadre allongée (1) à une zone d'extrémité de laquelle une deuxième partie de cadre allongée (4) est montée avec une zone d'extrémité pouvant pivoter par rapport à la première partie de cadre (1),
- dans lequel au niveau d'une zone d'extrémité libre de la deuxième partie de cadre (4), une roue avant (5) est montée de façon à pouvoir pivoter sur un étrier de support de roue (5.1, 5.2) avec un axe de pivotement par le biais duquel le plan de la roue avant (5) peut pivoter d'environ 90°, et
- dans lequel les deux roues arrière (3, 3') sont articulées au niveau des zones d'extrémité d'une traverse allongée (2) dans la zone d'articulation entre les première et deuxième parties de cadre (1, 4) de façon à pouvoir pivoter de telle sorte que leur axe de rotation peut pivoter d'une position à peu près en prolongement de la traverse (2) dans une position à peu près perpendiculaire par rapport à la traverse (2) et inversement,
- dans lequel les roues arrière (3, 3') sont articulées par un corps d'axe (3.1, 3.1') de façon à pouvoir pivoter d'environ 90° sur la traverse (2), **caractérisé en ce**
- **que** les roues arrière (3, 3') sont reliées par un guidon en forme de tige (10, 10') entre la deuxième partie de cadre (4) et les corps d'axe (3.1, 3.1') avec un joint articulé vers celles-ci de telle sorte que lors du pivotement des parties de cadre (1, 4) l'une par rapport à l'autre, les roues arrière (3, 3') pivotent d'environ 90° par rapport à la traverse (2).

3. Chariot de transport selon la revendication 2, dans lequel la traverse (2) est reliée au niveau de l'extrémité inférieure de la première partie de cadre (1) de façon rigide avec celle-ci.

4. Chariot de transport selon la revendication 1, dans lequel la traverse (2) est reliée de façon rigide à la deuxième partie de cadre (4) et est articulée de façon à pouvoir pivoter au niveau de la première partie de cadre (1).

5. Chariot de transport selon l'une quelconque des revendications 1 à 4, dans lequel l'étrier de support de roue (5.1, 5.2) peut être sorti et rentré par rapport à la deuxième partie de cadre (4) sur le plan longitudinal de son axe de pivotement.

6. Chariot de transport selon l'une quelconque des revendications précédentes, dans lequel entre les première et deuxième parties de cadre (1, 4) est prévu un système d'appui (9) qui maintient l'une par rapport à l'autre les deux parties de cadre (1, 4) dans la position fonctionnelle dans un angle et permet un pivotement des deux parties de cadre (1, 4) l'une par rapport à l'autre.

7. Chariot de transport selon l'une quelconque des revendications précédentes, dans lequel au niveau de l'extrémité libre de la première partie de cadre (1), un arc de préhension (6) est articulé de façon à pouvoir pivoter.

8. Chariot de transport selon l'une quelconque des revendications précédentes, dans lequel au niveau de la première et de la deuxième partie de cadre (1, 4) est monté respectivement un système de retenue ou d'appui (7, 8) pour un sac de golf.

9. Chariot de transport selon la revendication 8, dans lequel au niveau de la première partie de cadre (1), un arc enfichable courbé (7) est monté dans des attaches sur le sac de golf.

10. Chariot de transport selon la revendication 8, dans lequel sur la deuxième partie de cadre (4), un support (8) dépassant des deux parties de cadre est monté pour soutenir un sac de golf.

11. Chariot de transport selon l'une quelconque des revendications 1 à 10, dans lequel dans les corps d'axe (3.1, 3.1'), un moteur d'entraînement électrique pour les roues arrière (3, 3') est intégré.
